# EUROPÄISCHE PATENTSCHRIFT

(11) **EP 2 129 444 B1**
(45) Veröffentlichungstag und Bekanntmachung des Hinweises auf die Patenterteilung: **13.05.2015**
(21) Anmeldenummer: 08717727.5
(22) Anmeldetag: 13.03.2008
(51) Int. Cl.: B01D 33/00, B01D 29/11, B01D 29/54, B01D 29/68, B01D 33/39, B01D 33/50

(54) **FILTERANLAGE**
FILTER SYSTEM
DISPOSITIF DE FILTRATION

(30) Priorität: 23.03.2007 DE 102007014573
(43) Veröffentlichungstag der Anmeldung: 09.12.2009
(73) Patentinhaber: MAHLE International GmbH, 70376 Stuttgart (DE)
(72) Erfinder: KÜBLER, Udo, 74613 Öhringen (DE); STÖTZER, Dietrich, 74613 Öhringen (DE)
(74) Vertreter: BRP Renaud & Partner mbB Rechtsanwälte Patentanwälte Steuerberater
(86) Internationale Anmeldenummer: PCT/EP2008/052983
(87) Internationale Veröffentlichungsnummer: WO 2008/116758

(56) Entgegenhaltungen:
- WO-A-01/51167
- DE-A1- 4 009 552
- DE-A1- 4 311 710
- DE-U1- 20 014 299
- GB-A- 550 358
- GB-A- 1 440 814

## Beschreibung

Die vorliegende Erfindung betrifft eine Filteranlage zum Entfernen von Verunreinigungen aus einer Flüssigkeit, mit den Merkmaleil des Oberbegriffs des Anspruchs 1.

Filteranlagen dieser Art umfassen Üblicherweise ein Filtergehäuse, das einen Gehäuseinnenraum umschließt. Im Filtergehäuse ist dann zumindest ein zylindrischer Filterkörper angeordnet, der im Gehäuseinnenraum einen Rohraum radial von einem Reinraum trennt. Derartige Filteranlagen finden bevorzugt in Industrieanlagen Verwendung, beispielsweise um Kühlschmierstoffe zu reinigen.

Um eine derartige Filteranlage an unterschiedliche Filterleistungen anzupassen, ist es üblich, das Filtergehäuse und die Filterkörper bedarfsabhängig zu dimensionieren. Zur Erzielung größerer Volumenströme werden die Filterkörper entsprechend größer dimensioniert. In der Folge werden auch die Filtergehäuse entsprechend größer ausgeführt.

Eine gattungsgemäße Filteranlage ist aus der DE 40 09 552 A1 bekannt. Üblicherweise ist ein Gehäuse vorgesehen, das einen Gehäuseinnenraum umschließt und das einen Boden sowie einen Deckel aufweist. Im Filtergehäuse ist ein zylindrischer Filterkörper angeordnet, der im Gehäuseinnenraum einen Rohraum von einem Reinraum trennt und der wenigstens zwei zylindrische Filterelemente aufweist, die als Gleichteile ausgestaltet sind und die axial aneinander anliegen. Ferner ist eine Zuführeinrichtung für eine Rückspülung des Filterkörpers mit einem Spülmedium vorgesehen, die einen im Filtergehäuse reinseitig angeordneten Zuführkörper zum Zuführen des Spülmediums an eine der Reinseite zugewandte Filteroberfläche des Filterkörpers aufweist, wobei der Zuführkörper für jedes Filterelement mehrere Zuführelemente aufweist, die als Gleichteile ausgestaltet sind und die jeweils beim zugeordneten Filterelement das Spülmedium der der Reinseite zugewandten Filteroberfläche zuführen.

Weitere Filteranlagen, bei denen ein Filterkörper aus wenigstens zwei axial aneinander angeordneten Filterelementen gebildet ist, sind aus der WO 2001/51167 A1, der GB 550,358 und der GB 1 440 814 bekannt.

Aus der DE 43 11 710 A1 ist ebenfalls eine Filteranlage bekannt, bei der ein Filterkörper aus zwei axial aneinander angeordneten Filterelementen gebildet ist, wobei außerdem vorgesehen ist, dass die Filterelemente axial aneinander befestigt sind, dass jedes Filterelement an seinen axialen Enden angeordnete Ringkörper aufweist, nämlich einen jeweils einem Boden des Filtergehäuses zugewandten bodenseitigen Ringkörper und einen jeweils einem Deckel des Filtergehäuses zugewandten deckelseitigen Ringkörper, die als zueinander komplementäre Flansche ausgestaltet sind, die es ermöglichen, das eine Filterelement über seinen bodenseitigen Ringkörper am deckelseitigen Ringkörper des anderen Filterelements zu befestigen. Zur Positionierung des Filterkörpers im Filtergehäuse ist ferner ein über eine Feder am Deckel abgestützter Haltekörper vorgesehen, der komplementär zu den deckelseitigen Ringkörpern der Filterelemente ausgestaltet ist, so dass das deckelseitige Filterelement über seinen deckelseitigen Ringkörper am Haltekörper axial befestigt werden kann.

Aus der DE 200 14 299 Ul ist eine weitere Filteranlage mit Rückspülung des Filterkörpers bekannt.

Die vorliegende Erfindung beschäftigt sich mit dem Problem, für die Anpassbarkeit einer solchen Filteranlage an unterschiedliche Filterleistungen einen vorteilhaften Weg aufzuzeigen, der sich insbesondere durch reduzierte Herstellungkosten auszeichnet.

Dieses Problem wird durch den Gegenstand des unabhängigen Anspruchs gelöst- Vorteilhafte Ausführungsformen sind Gegenstand der abhängigen Ansprüche.

Die vorliegende Erfindung beruht auf dem allgemeinen Gedanken, zumindest den Filterkörper der Filteranlage modular aufzubauen. Als Module dienen hierbei als Gleichteile ausgestaltete Filterelemente, die axial aneinander befestigbar sind. Durch den modularen Aufbau des Filterkörpers ist es auf besonders einfache Weise möglich, die axiale Länge des Filterkörpers in einem durch die axiale Länge der einzelnen Filterelemente vorgegebenen Raster zu variieren. Somit lassen sich axial unterschiedlich lange Filterkörper durch die Verwendung einer unterschiedlichen Anzahl an Filterelementen realisieren. Da die Filterelemente als Gleichteile ausgestaltet sind, sind die Kosten für die Variantenbildung signifikant reduziert.

Erfindungsgemäß ist für einen vereinfachen Aufbau des Filterkörpers aus den einzelnen Filterelementen vorgesehen, dass jedes Filterelement einen Mantel und zwei, an jeweils einem axialen Ende des Mantels angeordnete Ringkörper aufweist, nämlich einen jeweils dem Boden zugewandten bodenseitigen Ringkörper und einen jeweils dem Deckel zugewandten deckelseitigen Ringkörper, die als-zueinander, komplementäre Flansche ausgestaltet sind, die es ermöglichen, das eine Filterelement über seinen bodenseitigen Ringkörper am deckelseitigen Ringkörper des anderen Filterelements zu befestigen. Weiterhin ist vorgesehen, dass der Filterkörper an seinen axialen Enden einen dem Boden zugewandten bodenseitigen Endkörper und einen dem Deckel zugewandten deckelseitigen Endkörper aufweist, die an verschiedenen Filterelementen befestigt sind, wobei die bodenseitigen Ringkörper der Filterelemente komplementär zu dem bodenseitigen Endkörper des Filterkörpers ausgestaltet sind, so dass der bodenseitige Endkörpern am bodenseitigen Ringkörper eines bodenseitig angeordneten Filterelements befestigbar ist, und wobei die deckelseitigen Ringkörper der Filterelemente komplementär zu dem deckelseitigen Endkörper des Filterkörpers ausgestaltet sind, so dass der deckelseitige Endkörper am deckelseitigen Ringkörper eines deckelseitig angeordneten Filterelements befestigbar ist.

Erfindungsgemäß weist die Filteranlage außerdem eine Zuführeinrichtung für eine Rückspülung des Filterkörpers mit einem Spülmedium auf, wobei die Zuführeinrichtung einen im Filtergehäuse reinseitig angeordneten Zuführkörper zum Zuführen des Spülmediums an eine der Reinseite zugewandte Filteroberfläche des Filterkörpers aufweist. Erfindungsgemäß ist nun auch der Zuführkörper modular aufgebaut, so dass er für jedes Filterelement ein Zuführelement aufweist, wobei die Zuführelemente als Gleichteile ausgestaltet sind, axial aneinander befestigbar sind und jeweils nur beim zugeordneten Filterelement das Spülmittel der der Reinseite zugewandten Filteroberfläche zuführen. Der modulare Aufbau der Filteranlage wird somit auch im Bereich der Zuführeinrichtung realisiert, was ebenfalls durch die Schaffung von Gleichteilen die Kosten für die Herstellung unterschiedlich langer Varianten senkt.

Bei einer anderen vorteilhaften Ausführungsform kann auch für eine Abführeinrichtung zum Abführen von mit einem Spülmedium rückgespülten Ablagerungen ein entsprechender modularer Aufbau realisiert werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugtes Ausführungsbeispiel der Erfindung ist in der Zeichnung dargestellt und wird in der nachfolgenden Beschreibung näher erläutert.

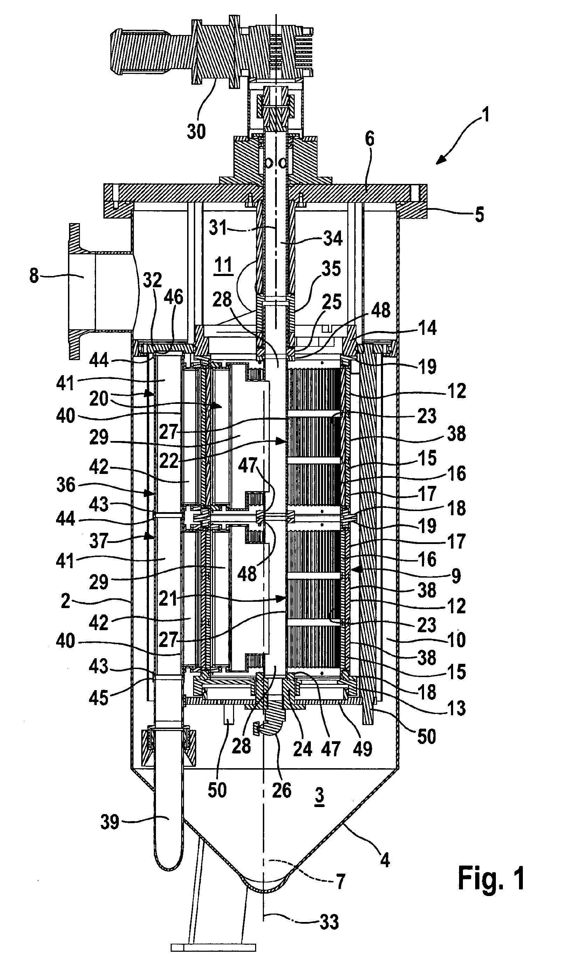

Die einzige Fig. 1 zeigt einen Längsschnitt durch eine Filteranlage.

Entsprechend Fig. 1 umfasst eine Filteranlage 1 ein druckstabiles Filtergehäuse 2, das einen Gehäuseinnenraum 3 umschließt. Das Filtergehäuse 2 ist bevorzugt zylindrisch, insbesondere kreiszylindrisch ausgestaltet, wodurch es bei vergleichsweise geringer Wandstärke die erforderliche Druckstabilität aufweist. Das Filtergehäuse 2 ist einenends mit einem kegelförmigen Boden 4 verschlossen. Anderenends weist das Filtergehäuse 2 einen Flansch 5 auf, an dem ein Deckel 6 zum Verschließen des Filtergehäuses 2 befestigt ist. Das Filtergehäuse 2 weist z.B. am Boden 4 einen hier durch die gewählte Schnittebene nicht erkennbaren rohseitigen Zulauf 7 auf, durch den ungefilterte Flüssigkeit dem Filtergehäuse 2 zuführbar ist. Ferner weist das Filtergehäuse 2 einen reinseitigen Rücklauf 8 auf, über den gereinigte Flüssigkeit vom Filtergehäuse 2 abführbar ist.

Die Filteranlage 1 weist zumindest einen Filterkörper 9 auf, der im Filtergehäuse 2 angeordnet ist und der zylindrisch, bevorzugt kreiszylindrisch, ausgestaltet ist. Zweckmäßig sind dabei der Filterkörper 9 mit seiner Längsmittelachse 31 und das Gehäuse 2 mit seiner Längsmittelachse 33 zueinander achsparallel angeordnet. Bevorzugt ist dabei eine leichte Exzentrizität. Der Filterkörper 9 trennt im Gehäuseinnenraum 3 einen mit dem Zulauf 7 kommunizierend verbundenen Rohraum 10 von einem mit dem Rücklauf 8 kommunizierend verbundenen Reinraum 11. Im gezeigten Beispiel erstreckt sich der Reinraum 11 in das Innere des Filterkörpers 9 hinein, während der Rohraum 10 den Filterkörper 9 von außen umgibt. Der Filterkörper 9 ist somit beim Filtern radial von außen nach innen durchströmt. Es ist klar, dass grundsätzlich auch eine umgekehrte Durchströmung des Filterkörpers 9 beim Reinigungsvorgang vorgesehen sein kann, so dass der Reinraum außen und der Rohraum innen angeordnet sind.

Der Filterkörper 9 weist im gezeigten Beispiel zwei Filterelemente 12 auf, die jeweils zylindrisch bzw. kreiszylindrisch ausgestaltet sind. Ferner sind die Filterelemente 12 als Gleichteile ausgestaltet. Die Filterelemente 12 sind axial aneinander befestigt. Es ist klar, dass bei einer anderen Ausführungsform der Filteranlage 1 auch mehr als zwei derartige Filterelemente 12 vorgesehen sein können, um den jeweiligen Filterkörper 9 aufzubauen. Ebenso ist eine Bauform für die Filteranlage 1 denkbar, bei welcher der Filterkörper 9 nur ein einziges Filterelement 12 dieser Art aufweist.

Der Filterkörper 9 weist an seinen axialen Enden jeweils einen Endkörper auf, nämlich einen dem Boden 4 zugewandten bodenseitigen Endkörper 13 und einen dem Deckel 6 zugewandten deckelseitigen Endkörper 14. Die beiden Endkörper 13, 14 sind dabei an verschiedenen Filterelementen 12 befestigt.

Der Filterkörper 9 ist im gezeigten Beispiel somit ausschließlich aus den Filterelementen 12 und den Endkörpern 13, 14 und dazu benötigten Befestigungsmitteln aufgebaut. Desweiteren ist der so aufgebaute Filterkörper 9 in sich formstabil und selbsttragend.

Jedes Filterelement 12 weist einen Mantel 15 auf, der zylindrisch bzw. kreiszylindrisch gestaltet ist und der im Betrieb der Filteranlage 1 die gewünschte Filterwirkung entfaltet. Beispielsweise kann der Filterkörper 9 bzw. das jeweilige Filterelement 12 nach Art eines Kantenspaltfilters ausgestaltet sein. Der Mantel 15 umfasst bei der hier gezeigten Ausführungsform radial innen eine druckstabile zylinderförmige Tragstruktur 16, die radial außen eine zylinderförmige Filterstruktur 17 trägt. Ferner weist jedes Filterelement 12 an jedem seiner axialen Enden jeweils einen Ringkörper auf, nämlich einen jeweils dem Boden 4 zugewandten bodenseitigen Ringkörper 18 und einen jeweils dem Deckel 6 zugewandten deckelseitigen Ringkörper 19. Die Ringkörper 18, 19 sind als zueinander komplementäre Flansche ausgestaltet, die es ermöglichen, das eine Filterelement 12 über seinen bodenseitigen Ringkörper 18 am deckelseitigen Ringkörper 19 des anderen Filterelements 12 zu befestigen. Desweiteren sind die Ringkörper 18, 19 der Filterelemente 12 komplementär zu den Endkörpern 13, 14 des Filterkörpers 9 ausgestaltet. Das bedeutet, dass der jeweilige bodenseitige Ringkörper 18 und der bodenseitige Endkörper 13 zueinander komplementäre Flansche bilden. Auf entsprechende Weise bilden der jeweilige deckelseitige Ringkörper 19 und der deckelseitige Endkörper 14 zueinander komplementäre Flansche. Dementsprechend kann der bodenseitige Endkörper 13 am bodenseitigen Ringkörper 18 des bodenseitig angeordneten Filterelements 12 befestigt werden, während der deckelseitige Endkörper 14 am deckelseitigen Ringkörper 19 des deckelseitig angeordneten Filterelements 12 befestigbar ist.

Im gezeigten Beispiel handelt es sich um einen regenerierbaren oder rückspülbaren Filterkörper 9. Bei der hier gezeigten Filteranlage 1 ist zur Regeneration des Filterkörpers 9 während des Betriebs eine Rückspüleinrichtung 20 vorgesehen. Die Rückspüleinrichtung 20 umfasst eine Zuführeinrichtung 21, die dazu ausgestaltet ist, ein geeignetes Spülmedium für eine Rückspülung des Filterkörpers 9 bereitzustellen bzw. zuzuführen. Als Spülmedium eignet sich beispielsweise ein Spülgas, wie z.B. Pressluft, oder eine Spülflüssigkeit, wie z.B. der Reinseite entnommene, gereinigte Flüssigkeit. Die Zuführeinrichtung 21 weist einen Zuführkörper 22 auf, der im Filtergehäuse 2 reinseitig angeordnet ist. Dementsprechend befindet sich der Zuführkörper 22 im gezeigten Beispiel im Inneren des Filterkörpers 9. Der Zuführkörper 22 ist so ausgestaltet, dass er zum Zuführen des Spülmediums an eine der Reinseite zugewandte, hier innere Filteroberfläche 23 des Filterkörpers 9 geeignet ist. Zu diesem Zweck ist der Zuführkörper 22 über einen bodenseitigen Anschluss 24 und/oder über einen deckelseitigen Anschluss 25 an eine Zuführleitung 26 angeschlossen, durch die das jeweilige Spülmedium den Zuführkörper 22 zuführbar ist. Der bodenseitige Anschluss 24 ist an einer Bodenplatte 49 angebracht, die über mehrere Zuganker 50 am Zwischenboden 32 befestigt ist.

Vorzugsweise weist der Zuführkörper 22 für jedes Filterelement 12 ein separates Zuführelement 27 auf. Im Beispiel sind somit zwei Zuführelemente 27 vorgesehen. Die Zuführelemente 27 sind jeweils als Gleichteile ausgestaltet und sind axial aneinander befestigbar. Desweiteren sind die einzelnen Zuführelemente 27 so dimensioniert, dass sie jeweils beim zugeordneten Filterelement 12 das jeweilige Spülmedium der inneren Filteroberfläche 23 zuführen. Somit beaufschlagt das deckelseitige Zuführelement 27 ausschließlich die innere Filteroberfläche 23 des deckelseitigen Filterelements 12 mit Spülmedium, während das bodenseitige Zuführelemente 27 ausschließlich die innere Filteroberfläche 23 des bodenseitigen Filterelements 12 mit Spülmedium beaufschlagt.

Für die Spülmittelbeaufschlagung der inneren Filteroberfläche 23 weist jedes Zuführelement 27 einen Zuführkanalkörper 28 auf sowie einen damit kommunizierend verbundenen Düsenkörper 29. Dabei ist der jeweilige Düsenkörper 29 so ausgestaltet, dass damit nur ein vergleichsweise kleines Umfangssegment der inneren Filteroberfläche 23 mit dem Spülmedium beaufschlagbar ist. Gleichzeitig erstreckt sich der jeweilige Düsenkörper 29 über die gesamte axiale Höhe der jeweils zugeordneten inneren Filteroberfläche 23. Durch diese Bauweise kann die Rückspülung mit Spülmedium auf einen vergleichsweise kleinen Abschnitt der inneren Filteroberfläche 23 konzentriert werden.

Die Filteranlage 1 weist außerdem einen Antrieb 30 auf, der eine Relativbewegung zwischen den Düsenkörpern 29 und den zugeordneten inneren Filteroberflächen 23 in der Umfangsrichtung der inneren Filteroberfläche 23 ermöglicht. Bevorzugt ist zu diesem Zweck der Filterkörper 9 um seine Längsmittelachse 31 drehbar im Filtergehäuse 2 angeordnet. Eine entsprechende Drehlagerung ist beispielsweise über die Endkörper 13, 14 erzielbar. Beispielsweise ist hierzu der bodenseitige Endkörper 13 am bodenseitigen Anschluss 24 drehbar gelagert, während der deckelseitige Endkörper 14 an einem Zwischenboden 32 im Gehäuse 2 drehbar gelagert ist.

Der Antrieb 30 wirkt über eine Antriebswelle 34 und einen damit drehfest verbundenen Antriebsflansch 35 mit dem deckelseitigen Endkörper 14 zusammen, um den Filterkörper 9 drehend anzutreiben. Die Antriebswelle 34 ist dabei hohl ausgestaltet und kann dadurch einen Bestandteil der Zuführeinrichtung 21 bilden.

Die Rückspüleinrichtung 20 der hier gezeigten Filteranlage 1 weist außerdem eine Abführeinrichtung 36 auf, mit deren Hilfe die im Rahmen der Rückspülung vom Filterkörper 9 getrennten bzw. entfernten Ablagerungen abführbar sind. Hierzu weist die Abführeinrichtung 36 einen Abführkörper 37 auf, der im Filtergehäuse 2 rohseitig, also hier außerhalb des Filterkörpers 9 angeordnet ist. Der Abführkörper 37 ermöglicht das Abführen der mit dem Spülmedium rückgespülten Ablagerungen von einer der Rohseite 3 zugewandten, hier äußeren Filteroberfläche 38 des Filterkörpers 9. Während des Filtrierbetriebs lagern sich rohseitig, also außen am Filterkörper 9 an besagter äußerer Filteroberfläche 38 Verunreinigungen an, die Ablagerungen bilden. Da derartige Ablagerungen den Strömungswiderstand erheblich erhöhen, werden sie mit Hilfe der Rückspülung entfernt. Bei der Rückspülung strömt das jeweilige Spülmedium entgegen der Filterrichtung, also hier von innen nach außen durch den Filterkörper 9, was zur gewünschten Abtrennung der Ablagerungen führt. Der Abführkörper 37 kann nun das bei der Rückspülung verwendete Spülmedium zusammen mit den rückgespülten bzw. abgelösten Ablagerungen aufnehmen und abführen. Beispielsweise ist der Abführkörper 37 hierzu an einen entsprechenden Austragkanal 39 angeschlossen, der aus dem Gehäuse 2 herausgeführt ist. Der Abführkörper 37 weist für jedes Filterelement 12 ein Abführelement 40 auf. Im vorliegenden Beispiel sind somit genau zwei solche Abführelemente 40 vorgesehen. Die Abführelemente 40 sind als Gleichteile ausgestaltet und sind axial aneinander befestigt. Desweiteren sind die einzelnen Abführelemente 40 so ausgestaltet, dass sie die beim jeweils zugeordneten Filterelement 12 rückgespülten Ablagerungen von der jeweiligen äußeren Filteroberfläche 38 abführen.

Im einzelnen besteht das jeweilige Abführelement 40 beispielsweise aus einem Abführkanalkörper 41 und einem damit kommunizierend verbundenen Einlaufkörper 42. Dabei ist der jeweilige Einlaufkörper 42 so ausgestaltet, dass damit bei einem umfangsmäßig begrenzten Umfangssegment der äußeren Filteroberfläche 38 die rückgespülten Ablagerungen entlang der gesamten axialen Höhe der äußeren Filteroberfläche 38 des jeweiligen Filterelements 12 aufnehmbar sind. Dabei ist der jeweilige Einlaufkörper 42 zweckmäßig fluchtend zum jeweiligen Düsenkörper 29 des korrespondierenden Zuführelements 27 am Filterkörper 9 bzw. am jeweiligen Filterelement 12 positioniert. Zwischen den Düsenkörpern 29 und den Einlaufkörpern 42 ist somit ein radialer Rückspülbereich ausgebildet, durch den der Filterkörper 9 bzw. die Filterelemente 12 tangential hindurchgeführt werden.

Die Abführelemente 40 sind an ihren axialen Enden jeweils mit Verbindungsflanschen 43 bzw. 44 versehen, die zueinander komplementär ausgestaltet sind. Hierdurch lassen sich zwei oder mehr Abführelemente 40 einfach axial miteinander verbinden. Ferner sind die Verbindungsflansche 43, 44 komplementär zu einem Anschluss 45 bzw. komplementär zu einer Halterung 46 ausgestaltet, was das Anschließen und Haltern des Abführkörpers 36 im Filtergehäuse 2 ermöglicht.

Auf entsprechende Weise sind auch die Zuführelemente 27 an ihren axialen Enden mit Verbindungsflanschen 47 bzw. 48 ausgestattet, die zueinander komplementär ausgestaltet sind und die es ermöglichen, zwei oder mehr derartige Zuführelemente 27 axial aneinander zu befestigen. Außerdem sind die Verbindungsflansche 47, 48 komplementär zum bodenseitigen Anschluss 24 bzw. zum deckelseitigen Anschluss 25 ausgestaltet, wodurch die Einbindung des Zuführkörpers 22 in die übrige Zuführeinrichtung 21 realisierbar ist.

Zum Herstellen von Filteranlagen 1 dieser Art ist zweckmäßig ein Baukastensystem vorgesehen, welches das Filterelement 12 sowie mehrere verschiedene Filtergehäuse 2 aufweist. Darüber hinaus kann dieses Baukastensystem auch das Zuführelement 27 und/oder das Abführelement 40 umfassen. Hierdurch wird für die Filteranlage 1 eine modulare Bauweise realisiert. Insbesondere lassen sich unterschiedliche Filterkörper 9 aufbauen, die sich bezüglich ihrer axialen Länge voneinander unterscheiden. Dabei lassen sich die unterschiedlichen axialen Längen dadurch realisieren, dass zum Aufbau des jeweiligen Filterkörpers 9 nur ein einziges Filterelement 12 oder zwei Filterelemente 12 oder mehr Filterelemente 12 verwendet werden. Entsprechend dazu kann dann auch die Rückspüleinrichtung 20 adaptiert werden. Beispielsweise wird dann der Zuführkörper 22 aus einem einzigen Zuführelement 27 oder aus zwei oder mehr Zuführelementen 27 aufgebaut. Analog dazu kann auch der Abführkörper 37 aus einem einzigen Abführelement 40 oder aus zwei oder mehr Abführelementen 40 zusammengebaut sein. Die im Baukastensystem bereitgestellten Filtergehäuse 2 unterscheiden sich hinsichtlich ihrer axialen Länge voneinander, und zwar in dem durch die axiale Länge der Filterelemente 12 definierten Raster.

Durch die vorgeschlagene modulare Bauweise des Filterkörpers 9 sowie vorzugsweise des Zuführkörpers 22 und/oder des Abführkörpers 37 können unterschiedlich leistungsstarke Filteranlagen 1 mit einem vergleichsweise geringen Aufwand bereitgestellt werden.

## Patentansprüche

1. Filteranlage zum Entfernen von Verunreinigungen aus einer Flüssigkeit,
- mit einem Filtergehäuse (2), das einen Gehäuseinnenraum (3) umschließt und das einen Boden (4) sowie einen Deckel (6) aufweist,
- mit wenigstens einem im Filtergehäuse (2) angeordneten, zylindrischen Filterkörper (9), der im Gehäuseinnenraum (3) einen Rohraum (10) von einem Reinraum (11) trennt,
- wobei der jeweilige Filterkörper (9) wenigstens zwei zylindrische Filterelemente (12) aufweist, die als Gleichteile ausgestaltet sind,
- wobei eine Zuführeinrichtung (21) für eine Rückspülung des Filterkörpers (9) mit einem Spülmedium vorgesehen ist,
- wobei die Zuführeinrichtung (21) einen im Filtergehäuse (2) reinseitig angeordneten Zuführkörper (22) zum Zuführen des Spülmediums an eine der Reinseite (11) zugewandte Filteroberfläche (23) des Filterkörpers (9) aufweist,
- wobei der Zuführkörper (22) für jedes Filterelement (12) ein Zuführelement (27) aufweist, die als Gleichteile ausgestaltet sind und die jeweils beim zugeordneten Filterelement (12) das Spülmedium der der Reinseite (11) zugewandten Filteroberfläche (23) zuführen,
**dadurch gekennzeichnet, dass**
- die Filterelemente (12) axial aneinander befestigt sind,
- jedes Filterelement (12) einen Mantel (15) und zwei, an jeweils einem axialen Ende des Mantels (15) angeordnete Ringkörper (18, 19) aufweist, nämlich einen jeweils dem Boden (4) zugewandten bodenseitigen Ringkörper (18) und einen jeweils dem Deckel (6) zugewandten deckelseitigen Ringkörper (19), die als zueinander komplementäre Flansche ausgestaltet sind, die es ermöglichen, das eine Filterelement (12) über seinen bodenseitigen Ringkörper (18) am deckelseitigen Ringkörper (19) des anderen Filterelements (12) zu befestigen,
- der Filterkörper (9) an seinen axialen Enden einen dem Boden (4) zugewandten bodenseitigen Endkörper (13) und einen dem Deckel (6) zugewandten deckelseitigen Endkörper (14) aufweist, die an verschiedenen Filterelementen (12) befestigt sind,
- die bodenseitigen Ringkörper (18) der Filterelemente (12) und der bodenseitige Endkörper (13) des Filterkörpers (9) zueinander komplementäre Flansche bilden,
- der bodenseitige Endkörper (13) am bodenseitigen Ringkörper (18) eines bodenseitig angeordneten Filterelements (12) befestigt ist,
- die deckelseitigen Ringkörper (19) der Filterelemente (12) und der deckelseitige Endkörper (14) des Filterkörpers (9) zueinander komplementäre Flansche bilden,
- der deckelseitige Endkörper (14) am deckelseitigen Ringkörper (19) eines deckelseitig angeordneten Filterelements (12) befestigt ist,
- die Zuführelemente (27) axial aneinander befestigt sind.

2. Filteranlage nach Anspruch 1,
**dadurch gekennzeichnet,**
**dass** jedes Zuführelement (27) einen Zuführkanalkörper (28) und einen damit kommunizierend verbundenen Düsenkörper (29) aufweist, der so ausgestaltet ist, dass damit über die ganze axiale Höhe der jeweiligen Filteroberfläche (23) ein Umfangssegment der Filteroberfläche (23) mit dem Spülmedium beaufschlagbar ist.

3. Filteranlage nach Anspruch 1 oder 2,
**dadurch gekennzeichnet,**
- **dass** eine Abführeinrichtung (36) für mit einem Spülmedium rückgespülte Ablagerungen vorgesehen ist,
- **dass** die Abführeinrichtung (36) einen im Filtergehäuse (2) rohseitig angeordneten Abführkörper (37) zum Abführen der mit dem Spülmedium rückgespülten Ablagerungen von einer der Rohseite (10) zugewandten Filteroberfläche (38) des Filterkörpers (9) aufweist,
- **dass** der Abführkörper (37) für jedes Filterelement (12) ein Abführelement (40) aufweist, die als Gleichteile ausgestaltet sind, die axial aneinander befestigt sind und die jeweils beim zugeordneten Filterelement (12) die rückgespülten Ablagerungen von der der Rohseite (10) zugewandten Filteroberfläche (38) abführen.

4. Filteranlage nach Anspruch 3,
**dadurch gekennzeichnet,**
**dass** jedes Abführelement (40) einen Abführkanalkörper (41) und einen damit kommunizierend verbundenen Einlaufkörper (42) aufweist, der so ausgestaltet ist, das damit bei einem Umfangssegment der jeweiligen Filteroberfläche (38) entlang der ganzen axialen Höhe der Filteroberfläche (38) die rückgespülten Ablagerungen aufnehmbar sind.

## Claims

1. Filter system for removing impurities from a fluid,
- having a filter housing (2) which encloses a housing interior (3) and comprises a base (4) and a lid (6)
- having at least one cylindrical filter body (9) which is arranged in the filter housing (2) and separates an untreated chamber (10) from a clean chamber (11) in the housing interior (3),
- each filter body (9) comprising at least two cylindrical filter elements (12) that are designed as identical components
- a feed device (21) for backflushing the filter body (9) being provided with a flushing medium,
- the feed device (21) comprising a feed body (22) arranged at the clean side in the filter housing (2) for feeding the flushing medium to a filter surface (23), facing the clean side (11), of the filter body (9),
- the feed body (22) comprising a feed element (27) for each filter element (12), which feed elements are each formed as identical parts and each of which, in the case of an associated filter element (12), feeds the flushing medium to the filter surface (23) facing the clean side (11),
**characterised in that**
- the filter elements (12) are joined together axially,
- each filter element (12) comprises a casing (15) and two annular bodies (18, 19) each arranged on an axial end of said casing (15), in particular a base-end annular body (18) facing the base (4) and a lid-end annular body (19) facing the lid (6), respectively, which annular bodies are configured as mutually complementary flanges which allow one filter element (12) to be fixed, via the base-end annular body (18) thereof, to the lid-end annular body (19) of the other filter element (12),
- the filter body (9) comprises on its axial ends a base-end end body (13) facing the base (4), and a lid-end end body (14) facing the lid (6), which elements are fixed to different filter elements (12),
- the base-end annular bodies (18) of the filter elements (12) and the base-end end body (13) of the filter body (9) form mutually complementary flanges,
- the base-end end body (13) is fixed to the base-end annular body (18) of a filter element (12) arranged at the base end,
- the lid-end annular bodies (19) of the filter elements (12) and the lid-end end body (14) of the filter body (9) form mutually complementary flanges,
- the lid-end end body (14) is fixed to the lid-end annular body (19) of a filter element (12) arranged at the lid end, and
- the feed elements (27) are connected together axially.

2. Filter system according to claim 1, **characterised in that** each feed element (27) comprises a feed channel body (28) and a nozzle body (29) which is in communication therewith and is configured such that it is possible, by means of said nozzle body, for a circumferential segment of the filter surface (23) to be supplied with the flushing medium across the entire axial height of the respective filter surface (23).

3. Filter system according to either claim 1 or claim 2, **characterised**
- **in that** a discharge device (36) is provided for deposits backflushed by a flushing medium,
- **in that** the discharge device (36) comprises a discharge body (37), which is arranged at the untreated side in the filter housing (2), for discharging the deposits, which have been backflushed by the flushing medium, from a filter surface (38), facing the untreated side (10), of the filter body (9), and
- **in that** the discharge body (37) comprises a discharge element (40) for each filter element (12), which discharge elements are configured as identical parts, are connected together axially, and, in the case of the associated filter element (12), discharge the backflushed deposits from the filter surface (38) facing the untreated side (10).

4. Filter system according to claim 3, **characterised in that** each discharge element (40) comprises a discharge channel body (41) and an inlet body (42) which is in communication therewith and is configured such that, in the case of a circumferential segment of the respective filter surface (38), the backflushed deposits can be gathered along the entire axial height of the filter surface (38) by means of said inlet body.

## Revendications

1. Dispositif de filtration pour éliminer des impuretés d'un liquide, comprenant :
- un boîtier de filtre (2), qui renferme un espace intérieur de boîtier (3) et qui présente un fond (4) ainsi qu'un couvercle (6),
- au moins un corps de filtre cylindrique (9) aménagé dans le boîtier de filtre (2), qui sépare un espace de produit brut (10) d'un espace de produit pur (11) dans l'espace interne de boîtier (3),
- dans lequel le corps de filtre respectif (9) présente au moins deux éléments de filtre cylindriques (12) qui se présentent sous la forme de parties égales,
- dans lequel un dispositif d'alimentation (21) est alimenté en agent de lavage pour un lavage à contre-courant du corps de filtre (9),
- dans lequel le dispositif d'alimentation (21) présente un corps d'alimentation (22) aménagé côté produit pur dans le boîtier de filtre (2) pour acheminer l'agent de lavage à une surface de filtration (23) du corps de filtre (9) tournée vers le côté produit pur (11),
- dans lequel le corps d'alimentation (22) présente pour chaque élément de filtre (12) un élément d'alimentation (27), lesdits éléments se présentant sous la forme de parties égales qui acheminent respectivement dans l'élément de filtre affecté (12) l'agent de lavage à la surface de filtration (23) tournée vers le côté produit pur (11),
**caractérisé en ce que** :
- les éléments de filtre (12) sont fixés axialement l'un à l'autre,
- chaque élément de filtre (12) présente une chemise (15) et deux corps annulaires (18, 19) aménagés à respectivement une extrémité axiale de la chemise (15), à savoir un corps annulaire côté fond (18) respectivement tourné vers le fond (4) et un corps annulaire côté couvercle (19) respectivement tourné vers le couvercle (6), qui se présentent sous la forme de brides mutuellement complémentaires, qui permettent de fixer un élément de filtre (12) au corps annulaire côté couvercle (19) de l'autre élément de filtre (12) via son corps annulaire côté fond (18),
- le corps de filtre (9) présente, à ses extrémités axiales, un corps d'extrémité côté fond (13) tourné vers le fond (4) et un corps d'extrémité côté couvercle (14) tourné vers le couvercle (6), qui sont fixés sur différents éléments de filtre (12),
- les corps annulaires côté fond (18) des éléments de filtre (12) et le corps d'extrémité côté fond (13) du corps de filtre (9) forment des brides mutuellement complémentaires,
- le corps d'extrémité côté fond (13) est fixé sur le corps annulaire côté fond (18) d'un élément de filtre (12) aménagé côté fond,
- les corps annulaires côté couvercle (19) des éléments de filtre (12) et le corps d'extrémité côté couvercle (14) du corps de filtre (9) forment des brides mutuellement complémentaires,
- le corps d'extrémité côté couvercle (14) est fixé sur le corps annulaire côté couvercle (19) d'un élément de filtre (12) aménagé côté couvercle (12), et
- les éléments d'alimentation (27) sont fixés axialement l'un à l'autre.

2. Dispositif de filtration selon la revendication 1, **caractérisé en ce que** :
chaque élément d'alimentation (27) présente un corps de canal d'alimentation (28) et un corps de buse (29) qui lui est relié en communication, qui est conformé de manière qu'ainsi un segment circonférentiel de la surface de filtration (23) puisse être alimenté par l'agent de lavage sur toute la hauteur axiale de la surface de filtration respective (23).

3. Dispositif de filtration selon la revendication 1 ou la revendication 2,
**caractérisé en ce que** :
- un dispositif d'évacuation (36) est prévu pour les dépôts lavés à contre-courant par un agent de lavage,
- le dispositif d'évacuation (36) présente un corps d'évacuation (37) aménagé côté produit brut dans le boîtier de filtre (2) pour évacuer les dépôts lavés à contre-courant par l'agent de lavage d'une surface de filtration (38) du corps de filtre (9) tournée vers le côté produit brut (10), et
- le corps d'évacuation (37) présente pour chaque élément de filtre (12) un élément d'évacuation, tous les éléments d'évacuation se présentant sous la forme de parties égales qui sont fixées axialement l'une à l'autre et évacuent respectivement dans l'élément de filtre affecté (12) les dépôts lavés à contre-courant de la surface de filtration (38) tournée vers le côté produit brut (10).

4. Dispositif de filtration selon la revendication 3, **caractérisé en ce que** :
chaque élément d'évacuation (40) présente un corps de canal d'évacuation (41) et un corps d'admission (42) qui lui est relié en communication et qui est conformé de manière qu'ainsi les dépôts lavés à contre-courant puissent être évacués dans un segment circonférentiel de la surface de filtration respective (38) sur toue la hauteur axiale de la surface de filtration (38).
